(19) Europäisches Patentamt
European Patent Office
Office européen des brevets

(11) **EP 2 864 845 B1**

(12) **EUROPÄISCHE PATENTSCHRIFT**

(45) Veröffentlichungstag und Bekanntmachung des Hinweises auf die Patenterteilung:
**07.09.2016 Patentblatt 2016/36**

(21) Anmeldenummer: **13734037.8**

(22) Anmeldetag: **01.07.2013**

(51) Int Cl.:
***G05B 9/03*** *(2006.01)*

(86) Internationale Anmeldenummer:
**PCT/EP2013/063783**

(87) Internationale Veröffentlichungsnummer:
**WO 2014/012776 (23.01.2014 Gazette 2014/04)**

(54) **AUTOMATISIERTE REKONFIGURATION EINES EREIGNISDISKRETEN REGELKREISES**

AUTOMATED RECONFIGURATION OF A DISCRETE EVENT CONTROL LOOP

RECONFIGURATION AUTOMATISÉE D'UN CIRCUIT DE RÉGLAGE À ÉVÉNEMENTS DISCRETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2012 EP 12176671**

(43) Veröffentlichungstag der Anmeldung:
**29.04.2015 Patentblatt 2015/18**

(73) Patentinhaber: **Siemens Aktiengesellschaft 80333 München (DE)**

(72) Erfinder:
• **RICHTER, Jan**
  **91207 Lauf a. d. Pegnitz (DE)**
• **MOOR, Thomas**
  **96172 Mühlhausen (DE)**
• **WITTMANN, Thomas**
  **91054 Erlangen (DE)**

(56) Entgegenhaltungen:
**CN-A- 102 243 280   DE-A1- 19 857 894
US-A- 6 085 127**

**Beschreibung**

Die Erfindung betrifft ein Verfahren und eine Vorrichtung zur automatisierten Entwurf eines ereignisdiskreten Regelkreises zur Regelung eines technischen Prozesses.

Technische Anlagen, insbesondere solche zur Realisierung diskreter Fertigungsprozesse (auch ereignisdiskrete Prozesse genannt) unterliegen Fehlern oder Ausfällen ihrer Komponenten, beispielsweise Aktoren oder Sensoren. Fehler können prinzipiell nicht ausgeschlossen werden, d. h. zur Aufrechterhaltung des Betriebes muss auf Fehler in geeigneter Weise reagiert werden. Dieses Problem bezieht sich insbesondere auf technische Anlagen, bei denen funktionierende (programmierbare) Steuerungen in Form von geschlossenen Regel- oder Steuerkreisen wesentlich für den korrekten Betrieb sind.
Ausfälle von Aktoren und Sensoren öffnen den Regelkreis und beenden den anforderungsgerechten Betrieb der Anlage. Andere Fehler dieser Komponenten, beispielsweise Degradation, verändern das Regelkreisverhalten häufig zum Nachteil. Diese Phänomene reduzieren die Verfügbarkeit und Zuverlässigkeit der Anlage und führen zu finanziellen Verlusten sowie zu Schäden an Gütern oder Personen. Klassisch wird das Problem durch Austausch defekter Komponenten umgangen.

Mit Fehlern sind vorzugsweise Ausfälle oder Degradierung kritischer Komponenten gemeint. Von der weiteren Betrachtung ausgeschlossen sind unvorhersehbare Fehler.

Ferner werden unter Regeln nicht nur Regeln im strengen Sinne von Regeln mittels eines geschlossenen Regelkreises mit einer Rückführung einer Ausgangsgröße auf einen Eingang eines Reglers gefasst, sondern dieser Begriff wird auch auf Steuern in einer offenen Wirkungskette (ohne Rückkopplung) ausgedehnt. Entsprechend werden unter die Begriffe Regelkreise, Regler und Regelstrecken auch jeweils offene Wirkungsketten, Steuerungen bzw. Steuerstrecken gefasst.

Stand der Technik

Dem beschriebenen Problem wird häufig durch Hardwareredundanz begegnet. Dabei werden kritisch wichtige Hardware-Komponenten (Aktoren, Sensoren) vor Inbetriebnahme der Anlage mehrfach installiert. Ein Teil der Komponenten wird im Normalbetrieb verwendet und laufend überwacht, die übrigen Komponenten verbleiben einsatzbereit. Zeigt die Überwachung einen Ausfall einer Komponente an, so wird nach einer einfachen Entscheidungslogik auf eine Ersatzkomponente umgeschaltet. Das Verfahren eignet sich zum Umgang mit Frühausfällen, Zufallsausfällen, und Ermüdungsausfällen gleichermaßen. Es findet insbesondere in sicherheitskritischen Anwendungen Einsatz, beispielsweise in der Kerntechnik oder in der Luftfahrt.
Das Problem kann auch durch Vorsehen von Voting-Schemas oder Diversität sowie durch Verwendung von Ersatz-Festwerten umgangen werden.

Die genannten Lösungen implizieren hohe Anlagenmehrkosten aufgrund der mehrfachen Installation von Komponenten. Automatisierte Lösungen, die über programmierte Speziallösungen hinausgehen, sind für ereignisdiskrete Prozesse bisher nicht bekannt.
Beim Auftreten von Fehlern, welche den Steuerkreis öffnen, wird in der Regel der (Teil-)betrieb eingestellt und Reparaturmaßnahmen eingeleitet.

Als Maßnahmen werden in der industriellen Praxis bisher vor allem folgende Vorgehensweisen angewandt:

1) Bank aus Steuerungen:

Für eine endliche Anzahl vor Inbetriebnahme durchdachter Fehlerfälle werden offline und manuell dedizierte Steuerungen entworfen, zwischen denen dann online umgeschaltet werden kann. Das Verfahren eignet sich zum Umgang mit Frühausfällen, Zufallsausfällen und Ermüdungsausfällen gleichermaßen. Diese Lösung hat den Nachteil, dass die Korrektheit der manuell programmierten Steuerungen nicht nachgewiesen ist und damit ungeeignete Fehlerreaktionen möglich sind. Für die im Weiteren betrachteten ereignisdiskreten Prozesse kommt noch ein Problem hinzu: die korrekte Initialisierung des Reglers, auf den umgeschaltet wird, erfordert die Kenntnis des Prozesszustands und des ausgefallenen Reglers zum Fehlerzeitpunkt. Diese Information ist häufig nicht unmittelbar bekannt, was die Umsetzung einer Bank von Steuerungen für ereignisdiskrete Prozesse in der Praxis erheblich erschwert.

2) Hardwareredundanz und -Diversität:

Kritisch wichtige Hardware-Komponenten (Aktoren, Sensoren) werden vor Inbetriebnahme der Anlage mehrfach installiert, so dass zur Zweckerfüllung nur ein Teil der Komponenten notwendig ist. Beispielsweise wird bei hochverfügbaren Steuerungen eine der Steuerungen im Normalbetrieb verwendet und laufend überwacht, die redundante Steuerung wird synchron gehalten und übernimmt bei Ausfall der Hauptsteuerung deren Rolle. Diese Klasse von Verfahren eignet sich zum Umgang mit Frühausfällen, Zufallsausfällen, und Ermüdungsausfällen gleichermaßen. Sie impliziert jedoch Anlagenmehrkosten aufgrund der mehrfachen Installation physischer Komponenten wie Aktoren oder Sensoren. Diversität, physische Redundanz und Voting finden vor allem in sicherheitskritischen Anwendungen Einsatz, beispielsweise in der Kerntechnik oder in der Luftfahrt.

Die DE 198 57 894 zeigt ein System welche Mittel zur Funktionsüberwachung, Fehlerdetektion und -lokalisierung und daraus resultierender Rekonfiguration aufweist. Hier werden die auftretenden Fehler in Echtzeit während des Betriebs des Gerätes detektiert werden. Dann wird die Software zur Laufzeit rekonfiguriert.

Aus der WO2013/017168 ist bereits ein Verfahren und eine Vorrichtung zur automatischen Rekonfiguration eines Regelkreises zur Regelung eines technischen Prozesses bekannt, wobei in der Laufzeitphase bei einem ermittelten Fehler der Regelkreis anhand eines mathematischen Modells automatisch rekonfiguriert wird, in dem zwischen dem Regler und der Regelstrecke ausgetauschte Signale fehlerabhängig abgeändert werden.

Ausgehend von diesem Stand der Technik liegt der Erfindung die Aufgabe zugrunde, ein verbessertes Verfahren und eine verbesserte Vorrichtung zur automatisierten Rekonfiguration eines Regelkreises zur Regelung eines technischen Prozesses anzugeben.

Die Aufgabe wird erfindungsgemäß hinsichtlich des Verfahrens durch die Merkmale des Anspruchs 1 und hinsichtlich der Vorrichtung durch die Merkmale des Anspruchs 7 gelöst.
Die Aufgabe wird weiterhin durch ein Computerprogrammprodukt gemäß Patentanspruch 13 gelöst.

Das erfindungsgemäße Verfahren dient zur automatisierten Rekonfiguration eines Regelkreises mit einer Regelstrecke mit physikalisch und/oder analytisch redundanten Komponenten und eine Fehlerdiagnoseeinheit zur Regelung eines technischen Prozesses.
In einem ersten Schritt wird in der Entwurfsphase ein erstes mathematisches Modell der nominellen Regelstrecke und eine nominelle Dynamik des Prozesses unter der Voraussetzung eines fehlerfreien Verhaltens des Regelkreises erstellt, indem erste Modell-Elemente, welche einer Modellbibliothek entnehmbar sind, verschaltet und parametriert werden.
In einem zweiten Schritt in der Regelstrecke werden möglicherweise auftretende Fehler und deren Auswirkungen definiert.
Aus dem mathematischen Modell und den zugehörigen Fehlerdefinitionen wird dann ein integriertes Modell des Regelkreises erzeugt, welches auch ein fehlerbehaftetes Verhalten des Regelkreises beinhaltet.
Analog wird eine Vorrichtung durch Durchführung des Verfahrens und ein Computerprogrammprodukt beansprucht.

Unter einer nominellen Regelstrecke wird eine Regelstrecke in einem fehlerfreien Zustand verstanden. Entsprechend wird unter einer nominellen Dynamik eines Prozesses ein fehlerfreier Ablauf des Prozesses verstanden. Unter einer Rekonfiguration eines Regelkreises wird eine Reaktion auf Fehlfunktionen von Komponenten der Regelstrecke des Regelkreises verstanden, welche den Fehlfunktionen entgegenwirkt, so dass die Auswirkungen der Fehlfunktionen auf den mittels des Regelkreises geregelten Prozess reduziert werden. Komponenten der Regelstrecke sind dabei insbesondere Aktoren und Sensoren.
Unter physikalisch redundanten Komponenten werden mehrfach installierte identische Komponenten verstanden, die einander ersetzen können, beispielsweise zwei identische Hydraulikaktoren zur Bewegung eines Schiffsruders. Unter analytisch redundanten Komponenten werden Komponenten verstanden, die zwar physikalisch verschieden sind, mittels derer aber bezüglich wenigstens einer Funktion eine gleichartige Wirkung erzielt werden kann. Beispielsweise kann ein Giermoment eines Schiffes mittels eines Ruders einerseits und mittels zweier entlang einer Querachse des Schiffes zueinander versetzter Schiffsantriebe andererseits erzeugt werden, so dass das Ruder und die beiden Schiffsantriebe analytisch redundante Komponenten bezüglich der Erzeugung des Giermomentes sind.

Die Regelstrecke ist eine automatisierungstechnische Anlage mit Komponenten, welche Aktoren und Sensoren umfasst, die in dem Regelkreis physikalisch und/oder analytisch redundant realisiert sind. Mittels der Fehlerdiagnoseeinheit sind Fehler dieser Komponenten ermittelbar und lokalisierbar, so dass mittels der Fehlerdiagnoseeinheit fehlerhafte Komponenten der Regelstrecke ermittelbar sind.

Vorteilhafte Ausgestaltungen der Erfindung sind Gegenstand der Unteransprüche.

In einer ersten Ausgestaltungsform wird das erste mathematischen Modell automatisch aus bereits existierenden Engineeringdaten anderer Entwurfssysteme erzeugt.

In einer weiteren vorteilhaften Ausgestaltung werden zur Erzeugung des integrierten Modells weiterhin Anforderungen an die Regelstrecke berücksichtigt und ein Steuerungsalgorithmus ermittelt, der in einer Laufzeitumgebung zum Ablauf gebracht werden kann. Anforderungen sind Aussagen über eine zu erfüllende Eigenschaft des geschlossenen Regelkreises.

Vorteilhaft ist es auch, wenn der Steuerungsalgorithmus vor dem Ablauf durch syntaktische Umformungen optimiert wird.

Das Modell und das integrierte Modell können beispielsweise durch einen Automaten, ein Petri-Netz oder durch prozeßalgebraische Ausdrücke definiert werden. Der Begriff Prozeßalgebra (oder Prozeßkalkül) umfasst eine große Familie von Ansätzen zur formalen Modellierung von nebenläufigen Systemen.

Es erlaubt die abstrakte Beschreibung von Interaktion, Kommunikation und Synchronisation zwischen einer Gruppe von unabhängigen Agenten oder Prozessen. Algebraische Gesetze ermöglichen die Analyse oder Umformung von Prozessbeschreibungen. Beispiele für eine Prozessalgebra sind CSP, CCS, ACP oder der Pi-Kalkül.

Weiterhin kann das mathematische Modell in einer Ausführungsform der nominellen Regelstrecke aus weiteren Informationen über zumindest zweite Elemente erzeugt werden, welche über eine Schnittstelle eingebbar sind.

Das im Folgenden beanspruchte Verfahren und die Vorrichtung befassen sich ausschließlich mit dynamischen Vorgängen, die sich dominant durch ereignisdiskrete Prozesse, z. B. durch Symbolfolgen, darstellen lassen und für deren Dynamik nicht die Zeit, sondern die logische Abfolge der Symbole ausschlaggebend ist. Zeitgetriebene dynamische Vorgange werden in hierarchisch unterlagerten Prozessen verborgen ausgeführt. Ihre speziellen Eigenschaften sind für die Lösung der Aufgabe nicht relevant.

Das Verfahren und die Vorrichtung gehen auf die Spezifik der ereignisdiskreten Probleme ein.

Die technische Vorrichtung zum Entwurf und zur Realisierung von automatisierten Reaktionen auf den Ausfall von Aktoren und Sensoren in diskreten automatisierungstechnischen Anlagen, sorgt dafür, dass die Auswirkungen dieser Ausfälle auf den Prozess minimal bleiben, sowie ein Verfahren, das es erlaubt, diese Fehler systematisch in ereignisdiskrete Modelle zu integrieren um auf dieser Basis einen formalen Entwurf fehlertoleranter ereignisdiskreter Steuerungen durchzuführen.

Das im Werkzeug zur Anwendung kommende Verfahren enthält keinerlei Einschränkung hinsichtlich der behandelbaren Fehler, solange es sich um Fehler handelt, die in der betreffenden Systemklasse (Automat, PetriNetz, Prozessalgebra) darstellbar sind.

Die abzudeckenden Fehlerfälle müssen vorgedacht und modelliert werden. Die zugehörige Steuerungslogik zum fehlertoleranten Betrieb wird dann aus dem Modell automatisch erstellt und in Laufzeit-Code übersetzt.

Die Kombination des Verfahrens zur Fehlermodellierung (Fehlerverträgliches Modell) mit etablierten Steuerungs-Syntheseverfahren für ereignisdiskrete Steuerungen geschieht in einer Art und Weise, welche einen nichtblockierenden und anforderungsgerechten Betrieb des Prozesses nach Fehlern ermöglicht.

Bei dem erfindungsgemäßen Verfahren wird die Schwierigkeit umgangen, dass bei einer expliziten Umschaltung des Steuerungsprogramms der diskrete Anfangszustand unbekannt ist. Dieses Problem ist charakteristisch für ereignisdiskrete Prozesse und tritt im Fall kontinuierliche dominierter dynamischer Systeme nicht auf bzw. ist dort umgehbar.

Der synthetisch entworfene Steuerungsalgorithmus ist per Konstruktion immer korrekt. Programmierfehler werden ausgeschlossen.

Das beschriebene Verfahren und die Vorrichtung erlauben weiterhin das Auffinden sinnvoller Lösungen auch dann, wenn Konkurrenzverfahren versagen, die auf Diagnostizierbarkeitsbegriffen (nach Sampath, Lafortune, "Diagnosability of Discrete-Event Systems", IEEE Transactions on Automation Control, Vol 40, No 9, Sept 1995) basieren.

Das Verfahren verweist auf die formale Code-Synthese, ein künftiges, zu etablierendes Vorgehensmodell für die Erstellung von Steuerungsprogrammen für ereignisdiskrete Systeme.

Definition des Fehlerverträglichen Modells:

$L_{FA}$    fehlerverträgliches Modell
$L_N$    Modell des fehlerfreien Verhaltens
F    Fehlerereignis
$L_D$    Modell des fehlerbehafteten Verhaltens
E    Alphabet des ereignisdiskreten Systems einschließlich Fehlerereignis

Dann ist das fehlerverträgliche Modell folgendermaßen bestimmt:

$$L_{FA} = L_N \bigcup (\bar{L}_N \, F \sum{}^{*} \bigcap L_D)$$

Auf Basis dieses Modells wird ein etabliertes Synthese-Verfahren durchgeführt.

In einer vorteilhaften Ausprägung werden für häufig vorkommende Aufgaben der Fertigungstechnik Formulare / Lösungs-Templates geliefert.

In einer weiteren vorteilhaften Ausprägung ist die Bibliothek über eine externe Schnittstelle durch eigene Verhaltensmodelle ergänzbar.

Eine ausführliche Beschreibung und Erklärung der mathematischen Grundlagen findet sich in der Veröffentlichung von Thomas Wittmann, Jan Richter und Thomas Moor, "Fault-Tolerant Control of Discrete Event Systems based on Fault-Accommodating Models".

Die oben beschriebenen Eigenschaften, Merkmale und Vorteile dieser Erfindung sowie die Art und Weise, wie diese erreicht werden, werden noch verständlicher im Zusammenhang mit der folgenden Beschreibung der Zeichnungen. Dabei zeigen:

Figur 1 ein Schema des formalen Verfahrens,
Figur 2 den erfindungsgemäßen Arbeitsfluss zur Rekonfiguration des Systems und

Figuren 3 bis 15 sind der Veröffentlichung "Fault-Tolerant Control..." entnommen.

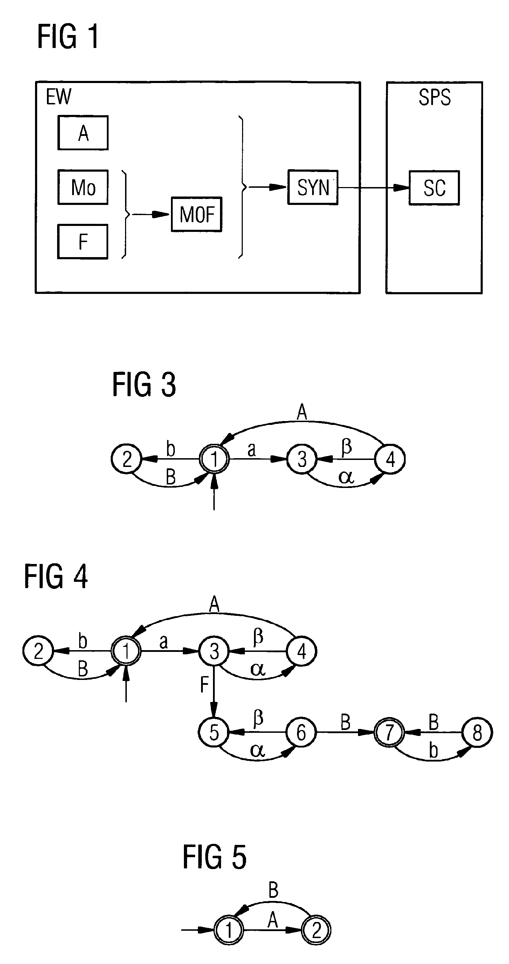

Figur 1 zeigt die Funktionalität des Werkzeugs EW, die sich in zwei Phasen teilt. In einer Entwurfsphase unterstützt das Werkzeug PC-gestützt beim Entwurf des Rekonfigurationssystems anhand der weiter unten beschriebenen Funktionen. Das Ergebnis der Entwurfsphase wird danach vom Werkzeug automatisiert in einen echtzeitfähigen Steuerungscode SC Code umgewandelt, welcher auf einer Hardwarekomponente wie z.B. einer Industriesteuerung SPS, einem Industrie-PC oder dem PC des Leitsystems zur Anwendung kommt.

Ziel der Entwurfsphase ist die Modellierung der Anlage im fehlerfreien Fall M0, sowie im Fehlerfall F, sowie der Entwurf eines fehlertoleranten Steuer-Algorithmus.

Das erstellte Modell MO der automatisierungstechnischen Anlage modelliert zunächst das fehlerfreie Verhalten der Anlage. Das Modell kann beispielsweise die Gestalt eines Automaten, eines Petri-Netzes oder prozessalgebraischer Ausdrücke annehmen. In einer vorteilhaften Ausprägung der Erfindung generiert das Werkzeug dieses Modell automatisch unter Verwendung von bereits existierenden Engineeringdaten anderer Entwurfssysteme (z. B. anderer CAE-Werkzeuge).

Danach werden explizit die Bedeutung und Wirkung der möglichen Fehler F modelliert.

Im nächsten Schritt wird aus diesen bei den Vorgaben ein einziges integriertes Modell erzeugt, das sowohl das fehlerfreie Verhalten, den Fehlerübergang und das Verhalten des Prozesses mit Fehler beinhaltet.

Auf Basis des integrierten Modells und vorgegebener Anforderungen A sowie auf Basis bekannter formaler Methoden wird ein Steuerungsalgorithmus S ermittelt, der dafür sorgt, dass der gesteuerte Prozess die Anforderungen A erfüllt. Der Algorithmus SC wird dann auf einer Laufzeitumgebung (z. B. einer speicherprogrammierbaren Steuerung SPS) zum Ablauf gebracht. Zwischen dem Syntheseergebnis und dem Ablauf des Algorithmus können optional weitere rein syntaktische Umformungen ("Code-Generatoren") liegen.

In der Laufzeitphase wird der Steuerungsalgorithmus SC abgearbeitet.

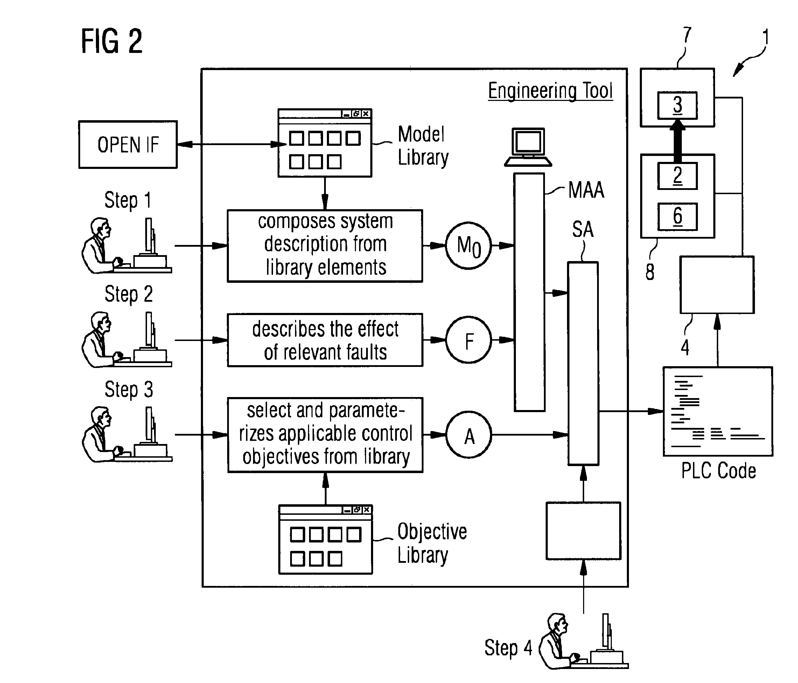

Gezeigt werden in Figur 2 die verschiedenen Phasen der Bedienung eines Engineering-Systems, Engineering Tool.

Im ersten Schritt Step1 wird ein Prozess beschrieben auf Basis bereitgestellter Modellelemente aus einer Bibliothek, Model Library, die verschaltet und parametriert werden, MAA. Ein Modellelement ist dann ein Modell eines Teilsystems der Anlage. Die Bibliothek stellt Vorlagen für Modelle häufig auftretender Teilsysteme bereit (z.B. Transportbänder, optische Sensoren, Weichen, Vereinzeler etc.). Jede einzelne Vorlage ist ein parametrierbares Modell. Alle Vorlagen zusammen machen die Bibliothek aus. Eine Bibliothek bezieht sich typisch auf eine spezielle Anwendungsdomäne (z.B. Verpackung, Flaschenabfüllung, Pressen, Automobilfertigung usw.). Der Begriff Solution soll den Domänenbezug klarstellen, weil die Bibliothek (neben den Methoden) den Kern der Lösung für eine Domäne/Branche darstellt.

Die Modellelemente basieren auf sogenannten "Solution Templates". Die Bibliothek kann eine offene Schnittstelle Open IF für die Einbindung von weiteren Bibliotheks-Elementen weiterer Modelle dritter Hersteller beinhalten.

Im zweiten Schritt Step2 werden die Auswirkung der Fehler auf das System unter Benutzung der Bibliotheks-Elemente beschrieben.

Im dritten Schritt Step3 werden die Anforderungen beschrieben, ggfs. durch Auswahl angebotener typischer Anforderungen aus einer Bibliothek Objective Library (ebenfalls Teil des "Solution Template").

Die Schritte 1 bis 3 können jeweils mit Tool-Unterstützung durchgeführt werden.

Im vierten Schritt wird ein Synthesealgorithmus SA aufgerufen. Er erhält den fertigen, per Konstruktion syntaktisch und semantisch korrekten SPS-Code, der bei Bedarf auch direkt in die SPS geladen werden kann.

Im Folgenden wird kurz dargestellt, wie in der Praxis ein integriertes Modell erzeugt werden kann.

Die Figuren 3 bis 15 zeigt Verhaltens-Modelle einer Anlage in Form von Petri Netzen, in Figur 3 mit den Zuständen 1 bis 4, wobei Zustand 1 der Startzustand ist.

Prozeß A läuft in Zustand 3,
Prozeß B im Zustandsübergang von 2 nach 1,
Ereignis a entspricht "Start von Prozess A" und
Ereignis b dem "Start von Prozess B".
$\alpha$ entspricht "Start untergeordneter Prozeß" und
$\beta$ "Ende untergeordneten Prozeß.

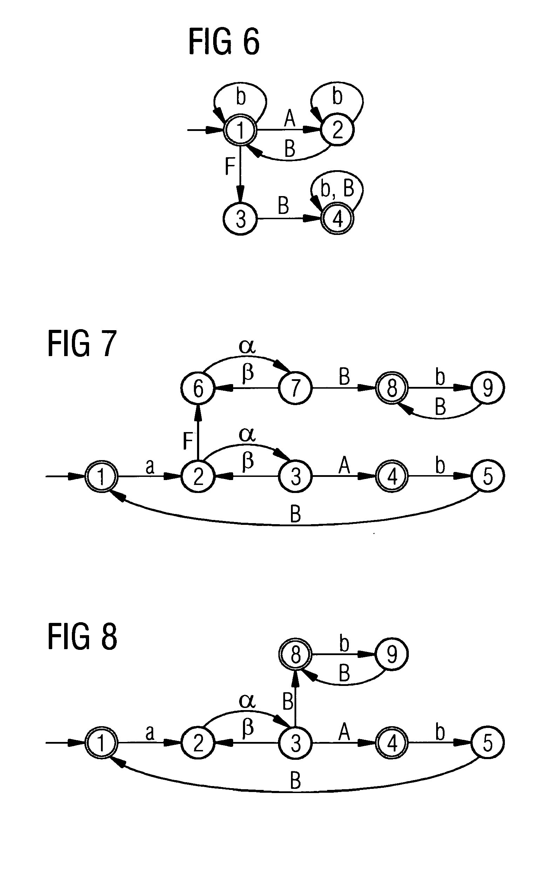

Figur 4 zeigt den Ablauf des Modells von Figur 3 mit zusätzlichen Fehlern behaftet. Die Fehlfunktionen werden als separate Ereignisse 5 bis 6 modelliert. Im Weiteren wird nur unterschieden zwischen Abläufen ohne und Abläufen mit Fehlern. Die Figuren 7 und 8 zeigen ein zulässiges fehlerfreies Verhalten und ein zulässiges fehlerbehaftetes Verhalten, F ist der Fehlerübergang.

Unter Verwendung von Standard-Algorithmen (vergleiche beispielsweise Yoo and Garcia, "Diagnosis of behaviors of interest in partially-observed discrete-event systems" Systems and Control Letters, 57(12): 1023-1029, 2008) werden die Modelle umgeformt, das Ergebnis ist in den Figuren 5 und 6 dargestellt.

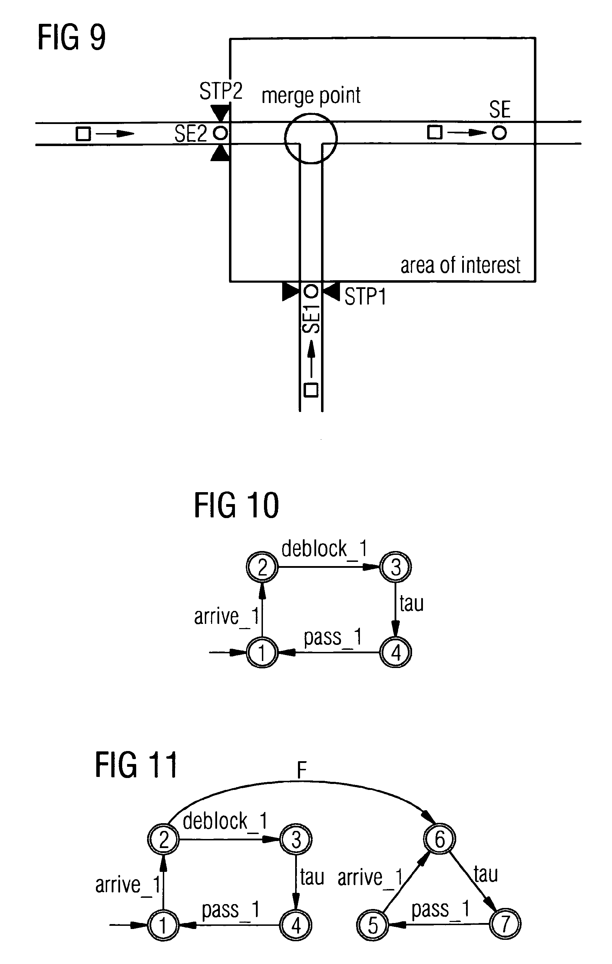

Ein konkreteres Beispiel wird in der Figur 9 gezeigt. Ein häufig vorkommendes Ereignis ist die kollisionsfreie Kontrolle eines Transportsystems (z. B. Laufband). Es wird angenommen, dass die Laufbänder eine fixe Geschwindigkeit einnehmen. Weiterhin ist davon auszugehen, dass eine Richtungsänderung des Laufbandes nicht möglich ist. Die Laufbänder treffen in einer Kreuzung aufeinander und beinhalten zwei Stopper Elemente STP1 und STP2 jeweils mit einem Sensor SE1 und SE2 ausgestattet. Die Stopper sind dafür verantwortlich, dass in dem Fluß der Werkstücke jedes für sich behandelt werden kann. Ein weiterer Sensor ist hinter dem Punkt angebracht, in dem die beiden Laufbänder aufeinander treffen. Weitere Annahmen sind: es gibt redundante Timer und der Abstand von STP2 zur Kreuzung wird als kürzer angenommen also der Abstand von STP1 zur Kreuzung. System Information kann aus den Stati der Sensoren entnommen werden. Sobald ein Werkstück den markierten Bereich erreicht haben Controller Aktionen keine Auswirkungen mehr auf die Bewegung, daher ist die Hauptaufgabe des Controllers die Koordination des Eintritts des Werkstücks in den markierten Bereich.

Es wird weiterhin davon ausgegangen, dass nur bei Stopper Element STP1 ein Fehler auftritt. Wenn ein Fehler auftritt, dann bleibt STP1 in einer offenen Position stecken, STP1 steht nicht mehr zur Verfügung zur aktiven Kontrolle, aber kann weiterhin zur Datensammlung verwendet werden.

Figur 10 zeigt ein mathematisches Modell eines Stopper Elements. Nach Erkennung eines Werkstücks kann der Stopper dieses blockeren oder durchlassen (deblock), nachdem das Werkstück durchgelassen wurde (pass) eine bestimmte Zeit abwarten (tau). Nach Auftreten eines Fehlers F, ist ein fehlerhaftes mögliches Verhalten des Stopper Elements in Figur 11 dargestellt.

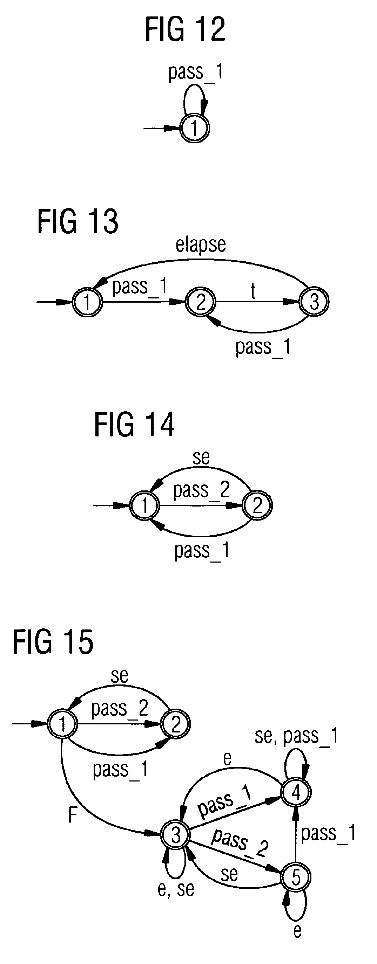

Figur 12 stellt ein mathematisches Modell zu einem Sensor dar und Figur 13 ein Modell zu einem Timer.

Das Verhalten wird in der folgenden Tabelle zusammengefasst:

| Ereignis | Interpretation | Attribut |
|---|---|---|
| arrive | Werkstück am Stopper detektiert | C, O |
| deblock | Stopper führt Öffnen-Zyklus durch | C, O |
| pass | Werkstück durchläuft Stopper | O |
| tau | Timer | C, O, F |
| t | Start Timer | O |
| e | Timer läuft aus | O |
| sc | Werkstück am Sensor SE detektiert | O |
| F | Fehler | |

Figur 14 zeigt das mathematische Modell zur Sicherheits-Spezifikation. Sobald der Stopper STP1 fehlerhaft ist, werden die benötigten Sicherheits-Vorgaben nicht mehr erfüllt und die Spezifikation geändert werden muss um die Auswirkungen des Fehlers zu begrenzen. Da Stopper STP2 näher an der Kreuzung ist als STP1 können Kollisionen vermieden werden indem alle Werkstücke am STP2 zumindest für den Zeitraum, den ein Werkstück benötigt, um von STP1 zur Kreuzung transportiert zu werden. Die Representation dieses Vorgehens ist Figur 15 zu entnehmen. Der kurzen Zusammenfassung und dem kleinen Beispiel ist zu entnehmen, wie der Entwurf einer Anlage in Form von mathematischen Modellen funktioniert. Alle Vorgaben können in der beispielhaften Weise so niedergeschrieben und weiter verarbeitet werden.

Die oben beschriebene Vorgehensweise ist nur beispielhaft zu verstehen, diese soll keine Einschränkung auf den Schutzbereich der Anmeldung haben.

**Patentansprüche**

**1.** Verfahren zur automatisierten Entwurf eines Regelkreises (1) zur Regelung eines technischen Prozesses, wobei der Regelkreis (1) eine Regelstrecke (4) mit physikalisch und/oder analytisch redundanten Komponenten und eine Fehlerdiagnoseeinheit aufweist, und wobei

- in einer Entwurfsphase ein erstes mathematisches Modell (M0) der nominellen Regelstrecke (4) und einer nominellen Dynamik des Prozesses unter der Voraussetzung eines fehlerfreien Verhaltens des Regelkreises erstellt wird,
- wobei erste Modellelemente einer Modell-Bibliothek verschaltet und parametriert werden, und
- in einem zweiten Schritt in der Regelstrecke möglicherweise auftretende Fehler (F) und deren Auswirkungen definiert werden
- aus dem mathematischen Modell (M0) und den zugehörigen Fehlerdefinitionen (F) ein integriertes Modell (M0F) des Regelkreises erzeugt wird, welches sowohl ein fehlerfreies als auch ein fehlerbehaftetes Verhalten des Regelkreises beinhaltet.

2. Verfahren nach Patentanspruch 1,
   **dadurch gekennzeichnet, dass**
   das erste mathematischen Modell (M0) automatisch aus bereits existierenden Engineeringdaten anderer Entwurfssysteme erzeugt wird.

3. Verfahren nach einem der vorherigen Patentansprüche, **dadurch gekennzeichnet, dass**
   zur Erzeugung des integrierten Modells (M0F) weiterhin Anforderungen (A) an die Regelstrecke berücksichtigt werden und ein Steuerungsalgorithmus (S) ermittelt wird, der in einer Laufzeitumgebung zum Ablauf gebracht werden kann.

4. Verfahren nach einem der vorherigen Patentansprüche, **dadurch gekennzeichnet, dass**
   der Steuerungsalgorithmus (S) vor dem Ablauf durch syntaktische Umformungen optimiert wird.

5. Verfahren nach einem der vorherigen Patentansprüche, **dadurch gekennzeichnet, dass**
   das mathematische Modell (M0) und das integrierte Modell (M0F) durch einen Automaten, ein Petri-Netz oder durch prozeßalgebraische Ausdrücke definiert werden.

6. Verfahren nach einem der vorherigen Patentansprüche, **dadurch gekennzeichnet, dass**
   das mathematisches Modell (M0) der nominellen Regelstrecke (4) aus weiteren Informationen über zumindest zweite Elemente erzeugt wird, welche über eine Schnittstelle eingebbar sind.

7. Vorrichtung zur Durchführung des Verfahrens zum automatisierten Entwurf eines Regelkreises (1) zur Regelung eines technischen Prozesses, umfassend eine Entwurfskomponente (EW)

   - mit Mitteln zur Erstellung ein erstes mathematisches Modell (M0) der nominellen Regelstrecke (4) und einer nominellen Dynamik des Prozesses unter der Voraussetzung eines fehlerfreien Verhaltens des Regelkreises, und
   - mit Mitteln zur Definition von in der Regelstrecke möglicherweise auftretenden Fehlern (F) und deren Auswirkungen auf den Ablauf des technischen Prozesses, und
   - mit Mitteln zur Erzeugung eines integrierten Modells (M0F) des Regelkreises aus dem mathematischen Modell (M0) und den zugehörigen Fehlerdefinitionen (F), das auch ein fehlerbehaftetes Verhalten des Regelkreises beinhaltet.

8. Vorrichtung nach Patentanspruch 7,
   **dadurch gekennzeichnet, dass**
   die Mittel zur Erzeugung des ersten mathematischen Modells (M0) bereits existierende Engineeringdaten anderer Entwurfssysteme zur Erzeugung verwendet.

9. Vorrichtung nach Patentanspruch 7 oder 8,
   **dadurch gekennzeichnet, dass**
   die Mittel zur Erzeugung des integrierten Modells (M0F) weiterhin Anforderungen (A) an die Regelstrecke berücksichtigen und
   ein Synthetisierungsmittel (Syn) einen Steuerungsalgorithmus (S) zum Ablauf in einer Laufzeitumgebung erzeugt.

10. Vorrichtung nach einem der vorherigen Patentansprüche 7 bis 9,

**dadurch gekennzeichnet, dass**
das Synthetisierungsmittel (Syn) den Steuerungsalgorithmus (S) vor dem Ablauf durch syntaktische Umformungen optimiert.

11. Vorrichtung nach einem der vorherigen Patentansprüche 7 bis 10,
**dadurch gekennzeichnet, dass**
das mathematische Modell (M0) und das integrierte Modell (M0F) durch einen Automaten, ein Petri-Netz oder durch prozeßalgebraische Ausdrücke definierbar ist.

12. Vorrichtung nach einem der vorherigen Patentansprüche 7 bis 11,
**dadurch gekennzeichnet, dass**
die Mittel zur Erzeugung des integrierten Modells (M0F) der nominellen Regelstrecke (4) eine Schnittstelle zur Eingabe von weiteren Modellbibliotheks-Elementen aufweisen, wobei insbesondere unter Verwendung von ersten Modellbibliotheks-Elementen, die verschaltet und parametriert werden können und zweiten Elementen, welche über eine Schnittstelle eingegeben werden, das integrierte Modell (M0F) erzeugt wird.

13. Computerprogrammprodukt zur Durchführung eines der Verfahren gemäß Anspruch 1 bis 6.


**Claims**

1. Method for automated design of a control loop (1) for regulating a technical process, wherein the control loop (1) has a control section (4) having physically and/or analytically redundant components and has a fault diagnosis unit, and wherein

   - in a design phase a first mathematical model (M0) of the nominal control section (4) and of nominal dynamics of the process is created on the assumption of fault-free behavior by the control loop,
   - wherein first model elements of a model library are connected up and parameterized, and
   - in a second step any faults (F) occurring in the control section and the effects of said faults are defined,
   - the mathematical model (M0) and the associated fault definitions (F) are used to produce an integrated model (M0F) of the control loop that contains both fault-free and faulty behavior by the control loop.

2. Method according to Patent Claim 1,
   **characterized in that**
   the first mathematical model (M0) is produced automatically from already existing engineering data from other design systems.

3. Method according to either of the preceding patent claims, **characterized in that**
   the integrated model (M0F) is produced by additionally taking into account demands (A) on the control section and ascertaining a control algorithm (S) that can be executed in a runtime environment.

4. Method according to one of the preceding patent claims, **characterized in that**
   the control algorithm (S) is optimized by syntactic transformations prior to execution.

5. Method according to one of the preceding patent claims, **characterized in that**
   the mathematical model (M0) and the integrated model (M0F) are defined by an automaton, a Petri net or by process algebraic expressions.

6. Method according to one of the preceding patent claims, **characterized in that**
   the mathematical model (M0) of the nominal control section (4) is produced from further information about at least second elements that can be input via an interface.

7. Apparatus for carrying out the method for automated design of a control loop (1) for regulating a technical process, comprising a design component (EW)

   - having means for creating a first mathematical model (M0) of the nominal control section (4) and of nominal dynamics of the process on the assumption of fault-free behavior by the control loop, and
   - having means for defining faults (F) occurring in the control section and the effects of said faults on the execution of the technical process, and

- having means for producing an integrated model (M0F) of the control loop from the mathematical model (M0) and the associated fault definitions (F), which model also contains faulty behavior by the control loop.

8. Apparatus according to Patent Claim 7,
   **characterized in that**
   the means for producing the first mathematical model (M0) use already existing engineering data from other design systems for production.

9. Apparatus according to Patent Claim 7 or 8,
   **characterized in that**
   the means for producing the integrated model (M0F) additionally take into account demands (A) on the control section, and
   a synthesization means (Syn) produces a control algorithm (S) for execution in a runtime environment.

10. Apparatus according to one of the preceding Patent Claims 7 to 9,
    **characterized in that**
    the synthesization means (Syn) optimizes the control algorithm (S) by means of syntactic transformations prior to execution.

11. Apparatus according to one of the preceding Patent Claims 7 to 10,
    **characterized in that**
    the mathematical model (M0) and the integrated model (M0F) can be defined by an automaton, a Petri net or by process algebraic expressions.

12. Apparatus according to one of the preceding Patent Claims 7 to 11,
    **characterized in that**
    the means for producing the integrated model (M0F) of the nominal control section (4) have an interface for inputting further model library elements, wherein the integrated model (M0F) is produced particularly by using first model library elements that can be connected up and parameterized and second elements that are input via an interface.

13. Computer program product for carrying out one of the methods according to Claims 1 to 6.

**Revendications**

1. Procédé pour la reconfiguration automatisée d'un circuit de réglage (1) pour la régulation d'un processus technique, dans lequel le circuit de réglage (1) présente une zone de réglage (4) avec des composants physiquement et/ou analytiquement redondants et une unité de diagnostic de défaut, et dans lequel

   - dans une phase de reconfiguration, on établit un premier modèle mathématique (M0) de la zone de réglage nominale (4) et d'une dynamique nominale du processus dans l'hypothèse d'un comportement sans défaut du circuit de réglage,
   - dans lequel des premiers éléments de modèle d'une bibliothèque de modèles sont interconnectés et paramétrés, et
   - dans une deuxième étape, on définit des défauts (F) survenant éventuellement dans la zone de réglage ainsi que leurs effets,
   - on produit à partir du modèle mathématique (M0) et des définitions de défauts correspondantes (F) un modèle intégré (M0F) du circuit de réglage, qui contient aussi bien un comportement sans défaut qu'un comportement défectueux du circuit de réglage.

2. Procédé selon la revendication 1, **caractérisé en ce que** l'on produit le premier modèle mathématique (M0) de façon automatique à partir de données techniques déjà existantes d'autres systèmes de reconfiguration.

3. Procédé selon l'une quelconque des revendications précédentes, **caractérisé en ce que** l'on tient compte en outre, pour la production du modèle intégré (M0F), d'exigences (A) à la zone de réglage et on détermine un algorithme de commande (S), qui peut être mis en oeuvre dans un environnement d'exécution.

**4.** Procédé selon l'une quelconque des revendications précédentes, **caractérisé en ce que** l'algorithme de commande (S) est optimisé par des conversions syntaxiques avant son exécution.

**5.** Procédé selon l'une quelconque des revendications précédentes, **caractérisé en ce que** l'on définit le modèle mathématique (M0) et le modèle intégré (M0F) au moyen d'un automate, d'un réseau de Petri ou par des expressions de l'algèbre de processus.

**6.** Procédé selon l'une quelconque des revendications précédentes, **caractérisé en ce que** l'on produit le modèle mathématique (M0) de la zone de réglage nominale (4) à partir d'autres informations au moyen d'au moins des deuxièmes éléments, qui peuvent être introduits par l'intermédiaire d'une interface.

**7.** Dispositif pour la mise en oeuvre du procédé pour la reconfiguration automatisée d'un circuit de réglage (1) pour la régulation d'un processus technique, comprenant un composant de reconfiguration (EW)

- avec des moyens pour l'établissement d'un premier modèle mathématique (M0) de la zone de réglage nominale (4) et d'une dynamique nominale du processus dans l'hypothèse d'un comportement sans défaut du circuit de réglage, et
- avec des moyens pour la définition de défauts (F) survenant éventuellement dans la zone de réglage et de leurs effets sur le déroulement du processus technique, et
- avec des moyens pour la production d'un modèle intégré (M0F) du circuit de réglage à partir du modèle mathématique (M0) et des définitions de défauts correspondantes (F), qui contient aussi un comportement défectueux du circuit de réglage.

**8.** Dispositif selon la revendication 7, **caractérisé en ce que** les moyens pour la production du premier modèle mathématique (M0) utilisent des données techniques déjà existantes d'autres systèmes de reconfiguration.

**9.** Dispositif selon la revendication 7 ou 8, **caractérisé en ce que** les moyens pour la production du modèle intégré (M0F) tiennent compte en outre d'exigences (A) à la zone de réglage, et un moyen de synthétisation (Syn) produit un algorithme de commande (S) pour la mise en oeuvre dans un environnement d'exécution.

**10.** Dispositif selon l'une quelconque des revendications 7 à 9, **caractérisé en ce que** le moyen de synthétisation (Syn) optimise l'algorithme de commande (S) par des conversions syntaxiques avant son exécution.

**11.** Dispositif selon l'une quelconque des revendications 7 à 10, **caractérisé en ce que** le modèle mathématique (M0) et le modèle intégré (M0F) peuvent être définis par un automate, par un réseau de Petri ou par des expressions de l'algèbre de processus.

**12.** Dispositif selon l'une quelconque des revendications 7 à 11, **caractérisé en ce que** les moyens pour la production du modèle intégré (M0F) de la zone de réglage nominale (4) présentent une interface pour l'introduction d'autres éléments de la bibliothèque de modèles, dans lequel le modèle intégré (M0F) est produit en particulier en utilisant des premiers éléments de la bibliothèque de modèles, qui peuvent être interconnectés et paramétrés et de deuxièmes éléments, qui sont introduits par l'intermédiaire d'une interface.

**13.** Produit de programme informatique pour la mise en oeuvre d'un des procédés selon les revendications 1 à 6.

FIG 1

FIG 3

FIG 4

FIG 5

FIG 2

Engineering Tool

OPEN IF

Model Library

Step 1

composes system description from library elements

$M_0$

MAA

SA

Step 2

describes the effect of relevant faults

F

Step 3

select and parameterizes applicable control objectives from library

A

Objective Library

Step 4

PLC Code

7
1
3
2
6
8
4

EP 2 864 845 B1

# FIG 6

# FIG 7

# FIG 8

FIG 9

FIG 10

FIG 11

## FIG 12

## FIG 13

## FIG 14

## FIG 15

**IN DER BESCHREIBUNG AUFGEFÜHRTE DOKUMENTE**

**In der Beschreibung aufgeführte Patentdokumente**

- DE 19857894

- WO 2013017168 A

**In der Beschreibung aufgeführte Nicht-Patentliteratur**

- **SAMPATH, LAFORTUNE.** Diagnosability of Discrete-Event Systems. *IEEE Transactions on Automation Control,* September 1995, vol. 40 (9
- **THOMAS WITTMANN ; JAN RICHTER ; THOMAS MOOR.** *Fault-Tolerant Control of Discrete Event Systems based on Fault-Accommodating Models*

- **YOO ; GARCIA.** Diagnosis of behaviors of interest in partially-observed discrete-event systems. *Systems and Control Letters,* 2008, vol. 57 (12), 1023-1029